(19) Europäisches Patentamt
European Patent Office
Office européen des brevets

(11) Veröffentlichungsnummer: **0 206 006**
**A1**

(12) **EUROPÄISCHE PATENTANMELDUNG**

(21) Anmeldenummer: **86107473.0**

(22) Anmeldetag: **02.06.86**

(51) Int. Cl.[4]: **C 08 L 69/00**
// (C08L69/00, 51:04, 25:02)

(30) Priorität: **14.06.85 DE 3521407**

(43) Veröffentlichungstag der Anmeldung: **30.12.86**
**Patentblatt 86/52**

(84) Benannte Vertragsstaaten: **DE FR GB IT NL**

(71) Anmelder: **BAYER AG, Konzernverwaltung RP**
**Patentabteilung, D-5090 Leverkusen 1 Bayerwerk (DE)**

(72) Erfinder: **Kress, Hans-Jürgen, Dr., Scheiblerstrasse 111, D-4150 Krefeld (DE)**
Erfinder: **Lindner, Christian, Dr., Riehlerstrasse 200, D-5000 Köln 60 (DE)**
Erfinder: **Schoeps, Jochen, Dr., Windmühlenstrasse 126, D-4150 Krefeld (DE)**

(54) **Thermoplastische Formmassen mit verbesserter Fliessnahtfestigkeit.**

(57) Gegenstand der vorliegenden Erfindung sind thermoplastische Formmassen enthaltend thermoplastische Polycarbonate, zwei verschiedene Pfropfpolymerisate, Copolymerisate und gegebenenfalls wirksame Mengen an Stabilisatoren, Pigmenten, Fließmitteln, Entformungsmitteln, Flammschutzmitteln und/oder Antistatika.

EP 0 206 006 A1

BAYER AKTIENGESELLSCHAFT 5090 Leverkusen, Bayerwerk
Konzernverwaltung RP
Patentabteilung PS/ABc

# Thermoplastische Formmassen mit verbesserter Fließnahtfestigkeit

Gegenstand der vorliegenden Erfindung sind thermoplastische Formmassen, enthaltend

A. 65 bis 55 Gew.-Teile, vorzugsweise 60 Gew.-Teile, eines thermoplastischen aromatischen Polycarbonats,

B. 27 bis 32 Gew.-Teile, vorzugsweise 30 Gew.-Teile, eines Pfropfpolymerisatgemisches aus

B.1 einem Pfropfpolymerisat aus 20 bis 30 Gew.-% einer Mischung aus

B.1.1 50 bis 95 Gew.-% Styrol, α-Methylstyrol, kernsubstituiertem Styrol, Methylmethacrylat oder Mischungen daraus und

B.1.2 5 bis 50 Gew.-% (Meth)Acrylnitril, Methylmethacrylat, Maleinsäureanhydrid, N-substituiertem Maleinimid oder Mischungen daraus auf

B.1.3. 70 bis 80 Gew.-% eines Kautschuks mit einer Glastemperatur $T_G \leq 10^0 C$

und

B.2 einem Pfropfpolymerisat aus 40 bis 60 Gew.-% einer Mischung aus

B.2.1 50 bis 95 Gew.-% Styrol, α-Methylstyrol, kernsubstituiertem Styrol, Methylmethacrylat oder Mischungen daraus und

B.2.2 5 bis 50 Gew.-% (Meth)Acrylnitril, Methylmethacrylat, Maleinsäureanhydrid, N-substituiertem Maleinimid oder Mischungen daraus, auf

B.2.3 60 bis 40 Gew.-% eines Kautschuks mit einer Glastemperatur $T_G \leq 10^0 C$,

wobei das Gewichtsverhältnis von B.1 zu B.2 im Bereich von 0,8 : 1 bis 1 : 0,8 liegt,

und

C. 8 bis 13 Gew.-Teile, vorzugsweise 10 Gew.-Teile, eines thermoplastischen Copolymerisats aus

C.1 50 bis 95 Gew.-% Styrol, α-Methylstyrol, kernsubstituiertem Styrol, Methylmethacrylat, oder Mischungen daraus und

C.2 5 bis 50 Gew-% (Meth)Acrylnitril, Methylmethacrylat, Maleinsäureanhydrid, N-substituiertem Maleinimid oder Mischungen daraus, wobei die Summe der Gew.-Teile aus den Komponenten A + B + C jeweils 100 beträgt,

sowie gegebenenfalls wirksame Mengen an Stabilisatoren, Pigmenten, Fließmitteln, Entformungsmitteln, Flammschutzmitteln und/oder Antistatika.

Die Verbesserung der Zusammenfließnahtfähigkeit von Mischungen aus thermoplastischen, aromatischen Polycarbonaten, Pfropfpolymerisaten und gegebenenfalls Copolymerisaten ist bereits beschrieben [siehe beispielsweise DE-OS 2 259 565, DE-OS 2 329 548, EP-OS 000 5202, EP-OS 00 74 112 (Sumitomo Naugatuck Co.) und DE-OS 3 336 369 (Sumitomo Naugatuck Co.)]. Hierbei sind für die Verbeserung der Zusammenfließnahtfestigkeit jeweils spezielle Bedingungen einzuhalten. Aus der DE-OS 2 329 546 sind Dreikomponentenmischungen von Polycarbonaten, Butadienpolymerisaten und Copolymerisaten bekannt, die ebenfalls eine besondere Festigkeit der Zusammenfließnähte haben (Seite 3, letzter Absatz der DE-OS).

Aus der EP-OS 0 080 767 (Stamicarbon BV) sind Mischungen aus Polycarbonaten, Copolymerisaten und zwei verschiedenen Pfropfpolymerisaten bekannt.

Derartigen Mischungen werden gute Fließeigenschaften in Kombination mit guten Zähigkeit, Härte, Steifigkeit und gute Werte im Kugelfalltest zugesprochen (Seite 2, Zeilen 24-27 der EP-OS 0 080 767). Über die Zusammenfließnahtfestigkeit derartiger Gemische ist nichts erwähnt.

Aus der EP-OS 0 104 695 sind Mischungen aus einem oder mehreren Pfropfpolymerisaten, einem oder mehreren Copolymerisaten, einem oder mehrere Polycarbonaten und einem oder mehreren Polyurethanen, bekannt. Derartigen Mischungen werden eine gute Benzinbeständigkeit, gute Verarbeitungseigenschaften und insbesondere ein gutes Fließverhalten zugeschrieben.

Der vorliegenden Erfindung liegt nun die Erkenntnis zugrunde, daß die gleichzeitige Verwendung von Polycarbonat, einem Gemisch aus zwei verschiedenen Pfropfpolymerisaten und einem aus den Pfropfmonomeren hergestellten thermoplastischen Copolymerisat eine thermoplastische Mischung mit außergewöhnlich hoher Fließnahtfestigkeit liefert, wobei das Einsatzverhältnis von Polycarbonat, Pfropfpolymerisatmischung und Copolymerisat sehr eng begrenzt ist.

Außerhalb der erfindungsgemäßen Zusammensetzung werden deutlich schlechtere Werte für die Fließnahtfestigkeit erhalten.

Erfindungsgemäß geeignete, thermoplastische, aromatische Polycarbonate gemäß Komponente A sind solche auf Basis der Diphenole der Formel (I)

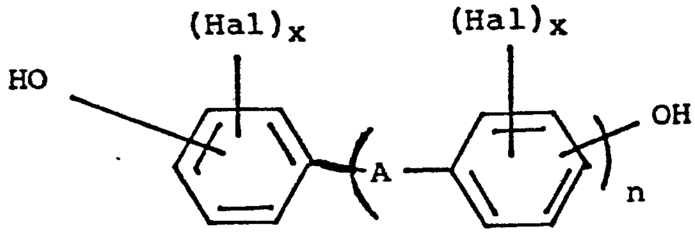

(I)

worin

A eine Einfachbindung, ein $C_1$-$C_5$-Alkylen, ein $C_2$-$C_5$-Alkyliden, ein $C_5$-$C_6$-Cycloalkyliden, -S- oder -$SO_2$-,

Hal Chlor oder Brom,

x 0, 1 oder 2 und

n 1 oder 0 sind,

und gegebenenfalls der Formel (Ia)

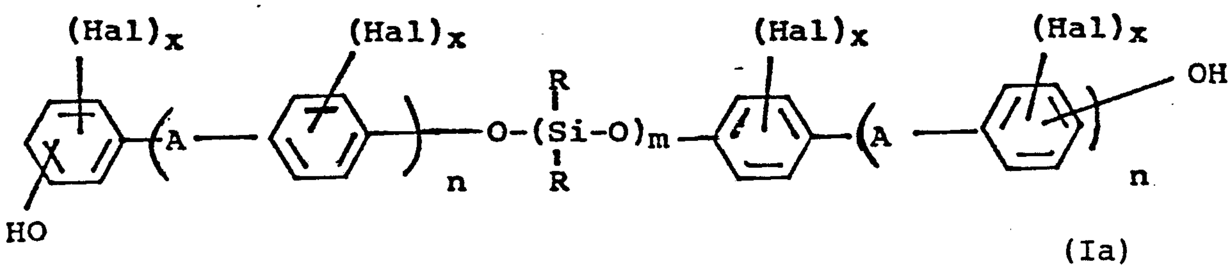

(Ia)

worin

A, Hal, x und n die für Formel (I) genannte Bedeutung haben, und worin die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und "m" eine ganze Zahl zwischen 5 und 100, vorzugsweise zwischen 20 und 80, ist.

Erfindungsgemäß geeignete Polycarbonate gemäß Komponente A sind sowohl Homopolycarbonate als auch Copolycarbonate, wobei die Diphenole der Formel (Ia) nur für die Herstellung von Copolycarbonaten mit den Diphenolen der Formel (I) eingesetzt werden, wobei der Gewichtsanteil an Diphenolen der Formel (Ia) in den Copolycarbonaten jeweils zwischen 1 und 20 Gew.-%, vorzugsweise zwischen 1,5 und 15 Gew.-% und insbesondere zwischen 2 und 10 Gew.-%, bezogen auf die Gewichtssumme der eingesetzten Diphenole der Formeln (I) und (Ia) liegt.

Die Diphenole der Formel (I) sind entweder literaturbekannt oder nach literaturbekannten Verfahren herstellbar; Polydiorganosiloxane mit Hydroxy-aryloxy-Endgruppen gemäß Formel (Ia) sind ebenfalls bekannt (siehe beispielsweise US-Patent 3 419 634) beziehungsweise nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in

homogener Phase (dem sogenannten Pyridinverfahren) erfolgen, wobei das jeweils einzustellende Molekulargewicht in bekannter Weisee durch eine entsprechende Menge an bekannten Kettenabbrechern erzielt wird. (Bezüglich Polydiorganosiloxan-haltigen Polycarbonaten siehe beispielsweise DE-OS 3 334 872).

Geeignete Kettenabbrecher sind beispielsweise Phenol, p-Chlorphenol, p-tert.-Butylphenol oder 2,4,6-Tribromphenol, aber auch langkettige Alkylphenole wie 4-(1,3-Tetramethyl-butyl)-phenol gemäß DE-OS 2 842 005 bzw. p-Nonylphenol, 3,5-di-tert.-Butylphenol, p-tert.-Octylphenol, p-Dodecylphenol, 2-(3,5-Dimethyl-heptyl)-phenol und 4-(3,5-Dimethyl-heptyl)-phenol gemäß deutscher Patentanmeldung P 3 506 472.2 (Le A 23 654).

Die erfindungsgemäß geeigneten Polycarbonate gemäß Komponente A haben mittlere Gewichtsmittelmolekulargewichte (Mw, gemessen beispielsweise durch Ultrazentrifugation oder Streulichtmessung) von 10 000 bis 200 000, vorzugsweise von 20 000 bis 80 000.

Geeignete Diphenole der Formel (I) sind beispielsweise Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3,5-dichlor-4-hydroxyphenyl)-propan und 2,2-Bis-(3,5-dibrom-4-hdroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Geeignete Diphenole der Formel (Ia) sind solche, in denen

R Methyl, Ethyl, Propyl, n-Butyl, tert.-Butyl und Phenyl ist.

Bevorzugte Diphenole der Formel (Ia) sind die der Formel (Ib)

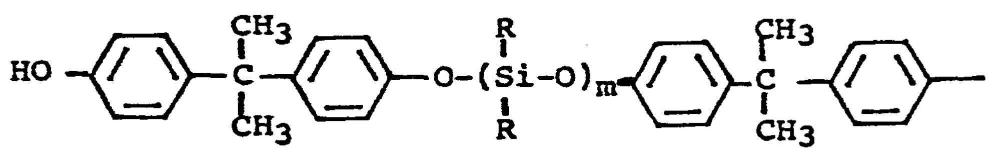

(Ib)

worin die R's gleich sind und die vorstehend genannte Bedeutung haben, also Methyl etc. und Naphthyl bedeuten und m wiederum eine ganze Zahl zwischen 5 und 100, vorzugsweise zwischen 20 und 80, ist.

Die Herstellung der Diphenole der Formel (Ia) kann beispielsweise aus den entsprechenden Bis-chlorverbindungen (II)

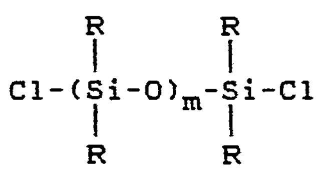

(II)

und den Diphenolen (I) beispielsweise gemäß US-Patent 3 419 634, Spalte 3 in Kombination mit US-Patent 3 189 662 erfolgen.

In den Bis-chlorverbindungen (II) haben R und m die Bedeutung wie in den Diphenolen (Ia) bzw. (Ib).

Die erfindungsgemäß geeigneten Polycarbonate gemäß Komponente A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolycarbonat die Copolycarbonate von Bisphenol A mit bis zu 15 Mol-%, bezogen auf die Molsumme an Diphenolen, an 2,2-Bis-(3,5-dibrom-4-hydroxyphenyl)-propan oder die Copolycarbonate der Diphenole der Formel (I) mit 1 bis 20 Gew.-% an Diphenolen der Formel (Ia), vorzugsweise der Formel (Ib), bezogen jeweils auf die Gewichtssumme der Diphenole (I) und (Ia), bzw. (I) und (Ib).

Zur Herstellung der Pfropfpolymerisate gemäß Komponente B.1 beziehungsweise B.2 geeignete Kautschuke sind insbesondere Polybutadien, Butadien/Styrol-Copolymerisate mit bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat oder Ethylmethacrylat). Weitere geeignete Kautschuke sind beispielsweise Polyisopren oder Polychloropren. Geeignet sind weiterhin Alkylacrylatkautschuke auf der Basis von $C_1$-$C_8$-Alkylacrylaten, insbesondere Ethyl-,

Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkende, ethylenisch ungesättigte Monomere enthalten. Solche Vernetzer sind zum Beispiel Alkylendiol-di(meth)-acrylate, Polyesterdi-(meth)-acrylat, Divinylbenzol, Tri-Vinylbenzol, Triallylcyanurat, Allyl-(meth)-acrylat, Butadien oder Isopren. Solche Alkylacrylatkautschuke sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomer, wie Styrol und/oder Acrylnitril, als Kern enthalten. Andere geeignete Kautschuke sind zum Beispiel EPDM-Kautschuke, also Kautschuke aus Ethylen, Propylen und einem unkonjugierten Dienmonomer.

Bevorzugte Kautschuke zur Herstellung der Pfropfpolymerisate (B.1 beziehungsweise B.2) sind Dienmonomer- und Alkylacrylatkautschuke.

Die Kautschuke liegen in den Pfropfpolymerisaten B.1 und B.2 in Form wenigstens partiell vernetzter Teilchen einer mittleren Teilchengröße von 0,09 bis 5 µm, insbesondere 0,1 bis 1 µm vor. Die Pfropfpolymerisate B.1 und B.2 werden durch radikalische Pfropfcopolymerisation der eingangs definierten Monomerengemische aus B.1.1 und B.1.2 sowie B.2.1 und B.2.2 in Gegenwart der zu pfropfenden Kautschuke B.1.3 sowie B.2.3 hergestellt und sind durchweg bekannt.

Bevorzugte Herstellungsverfahren für die Pfropfpolymerisate B.1 und B.2 sind Emulsions-, Lösungs-, Masse- oder Suspensionspolymerisation. Besonders bevorzugte Pfropfpolymerisate B.1 und B.2 sind die sogenannten ABS-Polymerisate. Als kernsubstituierte Styrole seien Halogenstyrole und p-Methylstyrol erwähnt.

Bevorzugte Copolymerisate gemäß Komponente C. sind solche aus wenigstens einem Monomeren aus der Reihe Styrol, α-Methylstyrol, kernsubstituiertem Styrol gemäß C.1 mit wenigstens einem Monomeren aus der Reihe Acrylnitril, Methacrylnitril, Methylmethacrylat, Maleinsäureanhydrid, N-subst.-Maleinimid gemäß C.2. Als kernsubstituierte Styrole seien wiedrum Halogenstyrole und p-Methylstyrol erwähnt.

Copolymerisate gemäß Komponente C. entstehen häufig bei der Pfropfpolymeriastion zur Herstellung der Komponenten B. als Nebenprodukte, besonders dann, wenn große Mengen Monomere auf kleine Mengen Kautschuk gepfropft werden.

Die erfindungsgemäß einzusetzende Menge an Copolymerisat C. von 8 bis 13 Gew.-Teilen, bezogen auf 100 Gew.-Teile aus A + B + C, bezieht diese Nebenprodukte der Pfropfpolymerisation nicht mit ein, diese sind gegebenenfalls viel mehr unter der Pfropfpolymerisatkomopnenten B subsummiert.

Die erfindungsgemäß einzusetzende Menge an Copolymerisat C sollte 13 Gew.-Teile nicht überschreiten, da sonst die hohe Fließnahtfestigkeit nicht mehr erzielt wird und sie sollte 8 % nicht unterschreiten, da sonst die Abmischungen keine genügende Fließfähigkeit mehr besitzen.

Die Copolymerisate gemäß Komponente C. sind harzartig, thermoplastisch und kautschukfrei. Besonders bevorzugte Copolymerisate C. sind solche aus Styrol und/oder α-Methylstyrol mit Acrylnitril und gegebenenfalls mit Methylmethacrylat.

Besonders bevorzugte Gewichtsverhältnisse im thermoplasten Copolymerisat C sind 60 - 80 Gew.-% C.1 und 40 - 20 Gew.-% C.2.

Die Copolymerisate gemäß Komponente C sind bekannt und lassen sich durch radikalische Polymerisation, insbesondere durch Emulsion-, Suspension-, Lösungs- oder Massepolymerisation herstellen. Die Copolymerisate gemäß Komponente C besitzen vorzugsweise Molekulargewichte Mw (Gewichtsmittel, ermittelt durch Lichtstreuung oder Sedimentation) zwischen 15 000 und 200 000.

Die erfindungsgemäßen Formmassen können für Polycarbonat/Pfropfpolymerisat-Formmassen bekannte Zusätze wie Stabilisatoren, Pigmente, Fließmittel, Entformungsmittel, Flammschutzmittel und/oder Antistatika in den üblichen Mengen enthalten.

Die erfindungsgemäßen Formmassen, enthaltend die Komponenten A, B, C und gegebenenfalls weitere bekannte Zusätze wie Stabilisatoren, Pigmente, Fließmittel, Entformungsmittel, Flammschutzmittel und/oder Antistatika, werden hergestellt, indem man die jeweiligen Bestandteile in bekannter Weise vermischt und bei Temperaturen von 200-330$^{0}$ C in üblichen Aggregaten wie Innenknetern, Extrudern oder Doppelwellenschnecken schmelzcompoundiert oder schmelzextrudiert.

Gegenstand der vorliegenden Erfindung ist somit auch ein Verfahren zur Herstellung von thermoplastischen Formmassen, enthaltend die Komponenten A, B, C und gegebenenfalls Stabilisatoren, Pigmente, Fließmittel, Entformungsmittel, Flammschutzmittel und/oder Antistatika, das dadurch gekennzeichnet ist, daß man die Komponenten A, B, C und gegebenenfalls Stabilisatoren, Pigmente, Fließmittel, Entformungsmittel, Flammschutzmittel und/oder Antistatika nach erfolgter Vermischung bei Temperaturen von 200 - 330$^{0}$ in gebräuchlichen Aggregaten schmelzcompoundiert oder schmelzextrudiert.

Die Vermischung der einzelnen Bestandteile kann in bekannter Weise sowohl sukzessive als auch simultan erfolgen, und zwar sowohl bei etwa 20$^{0}$ C (Raumtemperatur) als auch bei höherer Temperatur.

Die Formmassen der vorliegenden Erfindung können zur Herstellung von Formkörpern jeder Art verwendet werden.

Insbesondere können Formkörper durch Spritzguß hergestellt werden. Beispiele für herstellbare Formkörper sind: Gehäuseteile jeder Art (z.B. für Haushaltsgeräte wie Saftpressen, Kaffeemaschinen, Mixer) oder Abdeckplatten für den Bausektor und Teile für den Kfz-Sektor.

Die erfindungsgemäßen Formmassen werden außerdem auf dem Gebiet der Elektrotechnik eingesetzt, weil sie sehr gute elektrische Eigenschaften haben.

Eine weitere Form der Verarbeitung ist die Herstellung von Formkörpern durch Tiefziehen aus vorher hergestellten Platten oder Folien.

Teilchengröße bedeutet immer mittlerer Teilchendurchmesser $d_{50}$, ermittelt durch Ultrazentrifugenmessungen nach W. Scholtan et al., Kolloid-Z.u.Z. Polymere 250 (1972) 782-796.

Beispiele

Eingesetzte Polykondensate und Polymerisate

A.1 Linerares Polycarboant auf Basis Bisphenol A mit einer Lösungsviskosität von 1,26-1,28, gemessen in $CH_2Cl_2$ bei 25° C und in einer Konzentration von 0,5 g/100 ml.

A.2 Lineares Copolycarbonat auf Basis von Bisphenol-A und 5 Gew.-% Polydimethylsiloxan der Blocklänge (Pn) 40, mit einer relativen Lösungsviskosität von 1,29, gemessen in $CH_2Cl_2$ bei 25° C und einer Konzentration von 0,5 g/l, hergestellt aus Bisphenol-A, einem Diphenol der Formel (Ib) mit R = $CH_3$ und m = 40 und Phenol als Kettenabbrecher nach dem Phasengrenzflächenverfahren analog Beispiel 3 der DE-OS 3 334 782.

Die Bestimmung des Siloxangehaltes, d.h. des Anteils der Dimethylsiloxy-Einheiten in Gew.-%, bezogen auf das Gesamtgewicht des Block-copolycarbonats, erfolgte gravimetrisch und durch Kernresonanzspektrometrie. Als mittlere Siloxanblocklänge ist der durch Bestimmung der Endgruppen am Siloxan-Prepolymer ermittelte Polymerisationsgrad Pn angegeben.

B.1 SAN-Pfropfpolymerisat von 25 % Styrol/Acrylnitril-Gemisch (im Gew.-Verhältnis von 72:28) auf 75 % teilchenförmiges Polybutadien mit einer mittleren Teilchengröße ($d_{50}$) von 0,4 μm, erhalten durch Emulsionspolymerisation.

B.2 SAN-Pfropfpolymerisat von 50 % Styrol/Acrylnitril-Gemisch (im Gew.-Verhältnis von 72:28) auf 50 % teilchenförmiges Polybutadien mit einer mittleren Teilchengröße ($d_{50}$) von 0,4 μm, erhalten durch Emulsionspolymerisation.

C. Styrol/Acrylnitril-Copolymerisat mit einem Styrol/Acrylnitril-Verhältnis von 72:28 und einer Grenzviskosität von [η] = 0,55 dl/g (Messung in Dimethylformamid bei 20° C).

D. Als Fließhilfsmittel wurde ein thermoplastisches Polyurethanelastomer eingesetzt, das aus

100 Gew.-Teilen Polyhexandiolneopentylglykoladipat ($M_n$ ~2000)
40 Gew.-Teilen Hydrochinondihydroxyethylether und
63 Gew.-Teilen 4,4'-Diisocyanatodiphenylmethan

hergestellt worden ist, indem das Polyhexandiolneopentylglykoladipat und der Hydrochinondihydroxyethylether und 10-20 ppm Titantetrabutylat (bezogen auf Summe aus Polyhexandiolneopentylglykoladipat und Hydrochinondihydroxyethylether) gemischt, auf 80-100° C erwärmt, mit auf 50-60° C erwärmtem Diisocyanatodiphenylmethan ca. 30 sec. bis 1 min. kräftig verrührt und auf eine Polytetrafluorethylenfolie gegossen wurde. Der erstarrte Kuchen wurde bei ca. 100° C 2 bis 4 Stunden getempert und nach dem Erkalten granuliert.

E. Als Pigment wurde ein Ruß eingesetzt (Black Pearls/900® der Firma Cabot)

Die Herstellung der erfindungsgemäßen Formmassen erfolgte auf einem Doppelwellenextruder (Werner und Pfleiderer) vom Typ ZSK 53 bei einer Temperatur von 240° C.

Die Herstellung von Formkörpern erfolgte auf einer Spritzgußmaschine bei 260° C.

Die Bestimmung der Wärmeformbeständigkeit nach Vicat erfolgte gemäß DIN 53 460.

Die Bestimmung der Kerbschlagzähigkeit nach Izod erfolgte an Flachstäben der Abmessung 2,5 inches x 0,5 inch x 1/8 inch (6,35 cm x 1,27 cm x 0,318 cm), gemäß ASTM 256.

Die Bestimmung der Fließnahtfestigkeit erfolgte nach der DuPont Impact Strength-Methode, wobei eine Rundplatte von 50 mm Durchmesser und 3 mm Dicke als Prüfkörper genutzt wurde. Die Rundplatte wurde aus einer Platte der Abmessung 60 mm Kantenlänge und 3 mm Dicke, die über Spritzguß mit 2fachem Anguß, einseitig, parallel, hergestellt wurde, geschnitten.

Eine Stahlkugel mit dem Radius 6,35 cm bzw. 2,54 cm wird auf das Zentrum der Prüfplatte gesetzt. Ein Stahlgewicht fällt danach auf die Kugel. Bestimmt wird die maximale Energie, bei der an der Fließnaht kein Bruch auftritt.

Die Zusammensetzung der geprüften Mischungen sowie die erhaltenen Prüfdaten sind in der folgenden Tabelle aufgeführt.

| | | A 1 (Gew.-Tl.) | A 2 (Gew.-Tl.) | B 1 (Gew.-Tl.) | B 2 (Gew.-Tl.) | C (Gew.-Tl.) | D (Gew.-Tl.) | E (Gew.-Tl.) | Kerbschlagzähigkeit (J/m) | Fließnahtfestigkeit (kgcm) | Wärmeformbeständigkeit (°C) |
|---|---|---|---|---|---|---|---|---|---|---|---|
| Vergleichsversuche | 1 | 60 | - | 10 | 10 | 20 | 2 | 0,5 | 460 | 6,7 | 116 |
| | 2 | 60 | - | 15 | 10 | 15 | 2 | 0,5 | 484 | 14,2 | 115 |
| | 3 | 60 | - | 10 | 15 | 15 | 2 | 0,5 | 524 | 16,8 | 115 |
| erfindungsgemäße Versuche | 4 | 60 | - | 15 | 15 | 10 | 2 | 0,5 | 544 | 223,0 | 115 |
| | 5 | - | 60 | 15 | 15 | 10 | 2 | 0,5 | 519 | 129,0 | 112 |

Patentansprüche

1. Thermoplastische Formmassen, enthaltend

A. 65 bis 55 Gew.-Teile eines thermoplastischen aromatischen Polycarbonats auf Basis der Diphenole der Formel (I)

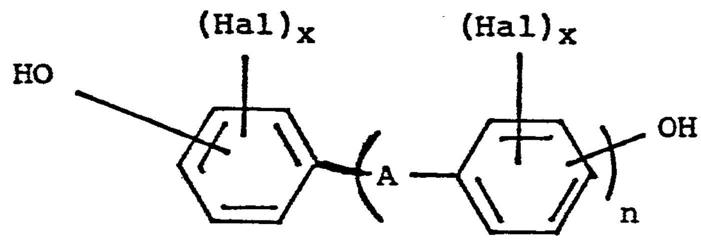

(I)

worin A eine Einfachbindung, ein $C_1$-$C_5$-Alkylen, ein $C_2$-$C_5$-Alkyliden, ein $C_5$-$C_6$-Cycloalkyliden, -S- oder $SO_2$-, "Hal", Chlor oder Brom, "X" 0, 1 oder 2 und "n" 1 oder 0 sind

B. 27 bis 32 Gew.-Teile, vorzugsweise 30 Gew.-Teile, eines Pfropfpolymerisatgemisches aus

B.1 einem Pfropfpolymerisat aus 20 bis 30 Gew.-% einer Mischung aus

B.1.1 50 bis 95 Gew.-% Styrol, α-Methylstyrol, kernsubstituiertem Styrol, Methylmethacrylat oder Mischungen daraus und

B.1.2 5 bis 50 Gew.-% (Meth)Acrylnitril, Methylmethacrylat, Maleinsäureanhydrid, N-substituiertem Maleinimid oder Mischungen daraus auf

B.1.3 70 bis 80 Gew.-% eines Kautschuks mit einer Glastemperatur $T_G \leq 10^\circ C$ und

B.2 einem Pfropfpolymerisat aus 40 bis 60 Gew.-% einer Mischung aus

B.2.1 50 bis 95 Gew.-% Styrol, α-Methylstyrol, kernsubstituiertem Styrol, Methylmethacrylat oder Mischungen daraus und

B.2.2 5 bis 50 Gew.-% (Meth)Acrylnitril, Methylmethacrylat, Maleinsäureanhydrid, N-substituiertem Maleinimid oder Mischungen daraus, auf

B.2.3 60 bis 40 Gew.-% eines Kautschuks mit einer Glastemperatur $T_G \leq 10^\circ C$, wobei das Gewichtsverhältnis von B.1 zu B.2 im Bereich von 0,8 : 1 bis 1 : 0,8 liegt, und

C. 8 bis 13 Gew.-Teile, vorzugsweise 10 Gew.-Teile, eines thermoplastischen Copolymerisats aus

C.1 50 bis 95 Gew.-% Styrol, α-Methylstyrol, kernsubstituiertem Styrol, Methylmethacrylat, oder Mischungen daraus und

C.2 5 bis 50 Gew-% (Meth)Acrylnitril, Methylmethacrylat, Maleinsäureanhydrid, N-substituiertem Maleinimid oder Mischungen daraus, wobei die Summe der Gew.-Teile aus den Komponenten A + B + C jeweils 100 beträgt.

2. Formmassen gemäß Anspruch 1, dadurch gekennzeichnet, daß das thermoplastische aromatische Polycarbonat ein Copolycarbonat ist, das zwischen 1 und 20 Gew.-%, bezogen auf die Gewichtssumme der eingesetzten Diphenole der Formeln (I) und (Ia), Diphenole der Formel (Ia) eingebaut enthält

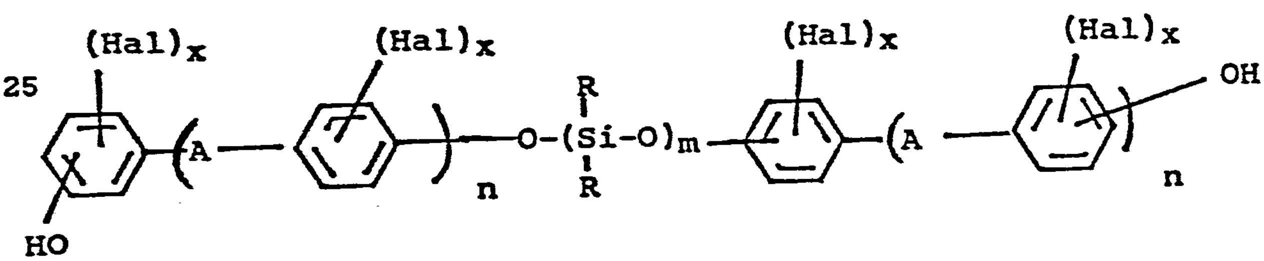

(Ia)

worin A, Hal, "x" und "n" die für Formel (I) in Anspruch 1 genannte Bedeutung haben, und worin die R's gleich oder verschieden sind und ein lineares $C_1$-$C_{20}$-Alkyl, verzweigtes $C_3$-$C_{20}$-Alkyl oder $C_6$-$C_{20}$-Aryl sind und "m" eine ganze Zahl zwischen 5 und 100 ist.

3. Formmassen gemäß Anspruch 2, dadurch gekennzeichnet, daß das Copolycarbonat 1,5 bis 15 Gew.-% Diphenole der Formel (Ia) eingebaut enthält.

4. Formmassen gemäß Anspruch 3, dadurch gekennzeichnet, daß das Copolycarbonat 2 bis 10 Gew.-% Diphenole der Formel (Ia) eingebaut enthält.

5. Formmassen gemäß Ansprüche 1 bis 4, enthaltend zusätzlich mindestens einen Zusatz, ausgewählt aus der Gruppe der Stabilisatoren, Pigmente, Fließmittel, Entformungsmittel, Flammschutzmittel und Antistatika.

6. Verfahren zur Herstellung der Formmassen der Ansprüche 1 bis 4, dadurch gekennzeichnet, daß man die Komponenten A, B und C nach erfolgter Vermischung bei Temperaturen von 220 - 330°C in gebräuchlichen Aggregaten schmelzcompoundiert oder schmelzextrudiert.

7. Verfahren gemäß Anspruch 6 zur Herstellung der Formmassen des Anspruches 5, dadurch gekennzeichnet, daß man mindestens einen Zusatz, ausgewählt aus der Gruppe der Stabilisatoren, Pigmente, Fließmittel, Entformungsmittel, Flammschutzmittel und Antistatika einbezieht.

0206006

Europäisches Patentamt

# EUROPÄISCHER RECHERCHENBERICHT

Nummer der Anmeldung

EP 86 10 7473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,X | EP-A-0 005 202 (BAYER)<br>* Anspruch; Beispiele 2,3 *<br>--- | 1,5-7 | C 08 L 69/00 //<br>(C 08 L 69/00<br>C 08 L 51:04<br>C 08 L 25:02 ) |
| D,A | FR-A-2 534 265 (SUMITOMO)<br>* Ansprüche 1,2; Seite 10, Tabelle *<br>--- | 1,5-7 | |
| D,A | EP-A-0 080 767 (STAMICARBON)<br>* Ansprüche 1-6 *<br>----- | 1,5-7 | |
| | | | RECHERCHIERTE SACHGEBIETE (Int. Cl.4) |
| | | | C 08 L |

Der vorliegende Recherchenbericht wurde für alle Patentansprüche erstellt.

| Recherchenort | Abschlußdatum der Recherche | Prüfer |
|---|---|---|
| DEN HAAG | 30-09-1986 | DECOCKER L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument